# EUROPEAN PATENT APPLICATION

(11) **EP 1 967 410 A1**
(43) Date of publication of application: **10.09.2008**
(21) Application number: 07103877.2
(22) Date of filing: 09.03.2007
(51) Int. Cl.: B60N 2/235

(54) **Locking device for motor-vehicle seats**

(71) Applicant: Martur Sunger ve Koltuk Tesisleri Ticaret Sanayi A.S., 80670 Maslak Istanbul (TR)
(72) Inventor: Turletti, Massimo, 10149, Torino (IT)
(74) Representative: Notaro, Giancarlo

(57) **Abstract**

A locking device for motor-vehicle seats comprises a locking unit (2) cooperating with a striker member (3) to lock the latter following a relative movement of the locking unit (2) and the striker member (3) towards each other. The striker member is in form of a bolt (3a) with an enlarged head (3b). The locking unit (2) has a housing (4) having a main axis (2a) which receives therein the above mentioned striker member (3) following the above mentioned relative movement, with the striker member (3) moving substantially in the direction of its axis and substantially parallel to the main axis (2a) of the locking unit. Inside the locking unit there are arranged locking jaws (6) adapted to be clamped around the locking bolt (3) so as to prevent a withdrawal thereof from the housing (4). The locking unit comprises an actuating ring (10) for actuating the jaws to the closed condition, first spring means (11) for biasing the actuating ring towards the condition for opening the jaws and a holding member (11) for holding the actuating ring (10) which is pushed by the striker member (3) following the relative axial movement of the latter within the housing (4) towards a position in which it leaves the actuating ring (10) free to drive closing of the jaws (6).

## Description

The present invention relates to locking devices for motor-vehicle seats, of the type comprising a locking unit cooperating with a striker member for locking this striker member within the locking unit following a relative movement of the locking unit and the striker member towards each other.

Locking devices of the above indicated type commonly have various applications, above all in rear seats for motor-vehicles, for instance for locking the base structure of a seat to the motor-vehicle floor panel, in cases in which the seat is completely removable from the floor panel or where the seat can be tilted forwardly to enlarge the loading compartment of the motor vehicle. Locking units of this type are also used for instance in order to lock the upper portion of the backrest of a rear seat to the side panels of a motor-vehicle body, in cases in which the seat backrest can be tilted forwardly.

In the most conventional solutions, the above mentioned locking units have a structure which is similar, in principle, to that of a lock for motor-vehicle doors, in which the striker member is constituted by a bolt which, during the above mentioned relative movement towards the locking unit, moves in a direction orthogonal to its axis with respect to the locking unit until it enters into the locking unit and is caught therein by a locking hook or fork.

In case, for instance, the known locking units are mounted on the lower structure of a seat which can be tilted forwardly to enlarge the loading compartment, there is the drawback that in the tilted condition of the seat, the lower surface of the seat is arranged substantially vertical and facing toward the rear part of the motor-vehicle, so that the locking units constitute a projection which is inconvenient and dangerous for the user. In order to avoid this drawback, it has been already proposed to pivotally support the locking units under the seat structure and to provide a linkage which causes the locking units to automatically rotate to a condition of minimum bulk following a forward rotation of the seat. However, this solution is relatively complicated and costly.

The object of the present invention is that of providing a locking device for motor-vehicle seats which has a relatively simple and reliable structure and which in particular avoids the above mentioned drawbacks.

In view of achieving this object, the invention provides a locking device for motor-vehicle seats having the features indicated at the beginning of the present description and further characterized in that:
- said striker member is in form of a bolt with an enlarged head,
- said locking unit has a housing, having a main axis, adapted to receive therein the striker member following the above mentioned relative movement, with the striker member moving substantially in the direction of its axis and substantially parallel to said main axis of the locking unit,
- inside the housing of the locking unit there are provided locking jaws, adapted to clamp the locking bolt therebetween, so as to prevent withdrawal thereof from the housing due to the interference with said enlarged head,
- said locking unit further comprising:
   - an actuating ring rotatably mounted substantially around the main axis of the locking unit, for driving a movement of said jaws from an opened condition to a closed condition,
   - first spring means for biasing said actuating ring towards the position causing closing of the jaws, and
   - a holding member for holding the actuating ring in the opened position of the jaws, arranged so as to be pushed in the direction of the main axis of the locking unit by the head of the striker member, following the relative movement of the latter within the housing of the locking unit, against the action of second spring means, towards a position in which said holding member leaves the actuating ring free to drive the closing movement of the jaws.

In a first embodiment, the above mentioned first spring means and the above mentioned second spring means are constituted by a single helical spring, arranged with its axis substantially coincident with the main axis of the locking unit. In a second embodiment, the first and second spring means are constituted by two separate springs. Furthermore, in the above mentioned first embodiment, the jaws of the locking unit are pivotally mounted around respective axes arranged circumferentially around the main axis and parallel thereto. In one variant of this first embodiment, the jaws are slidable along radial directions with respect to the main axis. Finally, in the second embodiment, the jaws are two in number and have adjacent ends pivotally connected to each other, one of the two remaining ends being associated to one portion of the actuating ring and the other end being pivotally connected to the housing of the locking unit. Whatever is the solution, the jaws are arranged to move automatically from the opened condition to the closed condition when the striker member enters into the locking unit due to its relative movement with respect to the latter and pushes the above mentioned holding member in the direction of the main axis of the locking unit up to a position in which the actuating ring is left free to cause closing of the jaws.

It is particularly important to note that in all the embodiments of the device according to the invention the actuating ring is rotatably mounted around an axis which is not strictly fixed, the ring being free to float, to a certain extent, within its plane, so as to accommodate any misalignments of the striker bolt with respect to the main axis of the locking unit which can be caused by the tolerances of manufacture.

Further features and advantages of the invention will become apparent from the following description with reference to the annexed drawings, given purely by way of non limiting example, in which:
figure 1 is a perspective view of a locking device according to a first embodiment of the present invention,
figure 2 is a perspective view of the device of figure 1, taken from the side opposite to that of figure 1,
figure 3 is a perspective view of the device of figure 1, with the housing removed,
figure 4 is an exploded perspective view of the locking device of figure 1,
figure 5 is an exploded side view of the device of figure 1,
figures 6-8 show a cross-section of the device of figure 1, in a plane orthogonal to the main axis of the device, and in three different operative conditions,
figures 9, 10 show a view in cross-section of the device of figure 1, in a plane containing the main axis of the device, in two different operative conditions of the device,
figure 11 is an exploded perspective view of a second embodiment of the device according to the invention,
figure 12 is an exploded side view of the device of figure 11,
figure 13-15 show a cross-sectional view of the device of figure 11, in a plane orthogonal to the main axis of the device, in three different operative conditions,
figure 16 is a perspective view, with the housing removed, of a third embodiment of the device according to the invention,
figure 17 is an exploded perspective view of the device of figure 16,
figure 18 is an exploded side view of the device of figure 16,
figures 19-21 show a view in cross-section of the device of figure 16, in a plane orthogonal to the main axis of the device, in three different operative conditions,
figures 22, 23 show a view in cross-section of the device of figure 16, in a plane containing remain axis of the device, in two different operative conditions, and
figure 24 is a perspective view of the device of figure 16, with some parts removed.

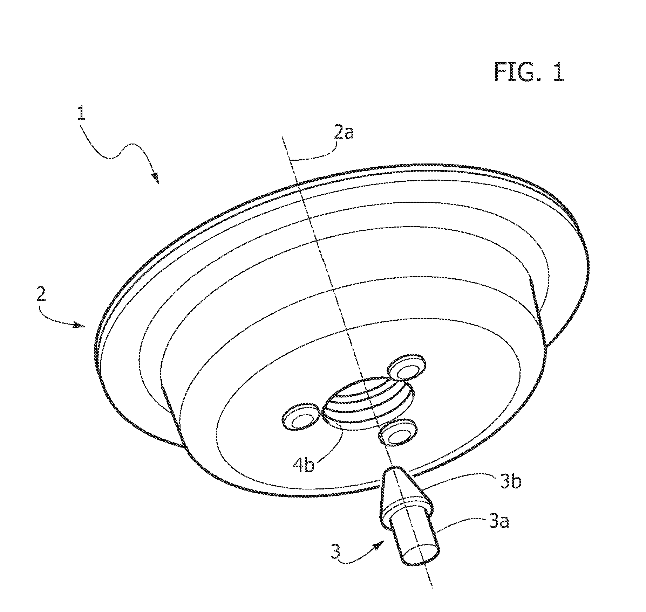

In figure 1, numeral 1 generally designates a locking device for motor-vehicle seats, comprising a locking unit 2 adapted to cooperate with a striker member 3 for locking the striker member 3 within the locking unit 2 following a relative movement of the locking unit 2 and the striker member 3 towards each other. As shown, the striker member 3 is in form of a cylindrical bolt 3a, with a front enlarged head 3b. The arrangement is such that the above mentioned relative movement takes place with the bolt 3 moving substantially in the direction of its axis and substantially parallel to the direction of the main axis of the locking unit 2, which is designated by 2a.

In an exemplary application, the locking unit 2 is to be arranged below the base structure of a motor-vehicle seat of the type which can be tilted forwardly to enlarge the motor-vehicle loading compartment. The striker member 3 is to be arranged on the motor-vehicle floor panel, with its axis directed vertically. When the seat is brought back to its lowered operative position, the locking unit 2 carried by the seat comes into engagement above the striker member 3. In the case of this application, the movement of the locking unit 2 follows a circular path around the articulation axis of the tiltable seat on the motor-vehicle floor panel. However, in the final stage of the lowering cradle of the seat, when the locking unit 2 comes to engage the striker member 3, the above mentioned path is approximately straight and vertical, the locking unit being made so that it enables proper operation even if the relative movement of the locking unit and the striker bolt 3 is not strictly rectilinear.

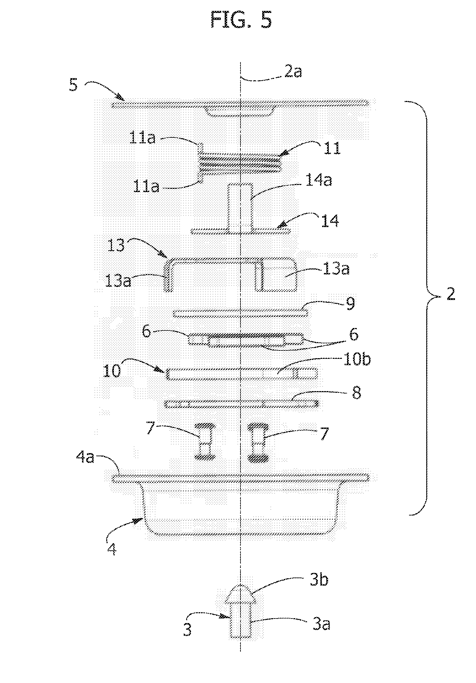

With reference to figures 1, 4 and 5, the locking unit 2 has a housing constituted by a bell-shaped element 4, having a flat bottom, with an annular flange 4a to which there is fixed a disk 5 which closes the inner space of the bell-shaped element 4.

The bottom wall of the bell-shaped element 4 has an aperture 4b for access of the striker member 3 into the housing 4.

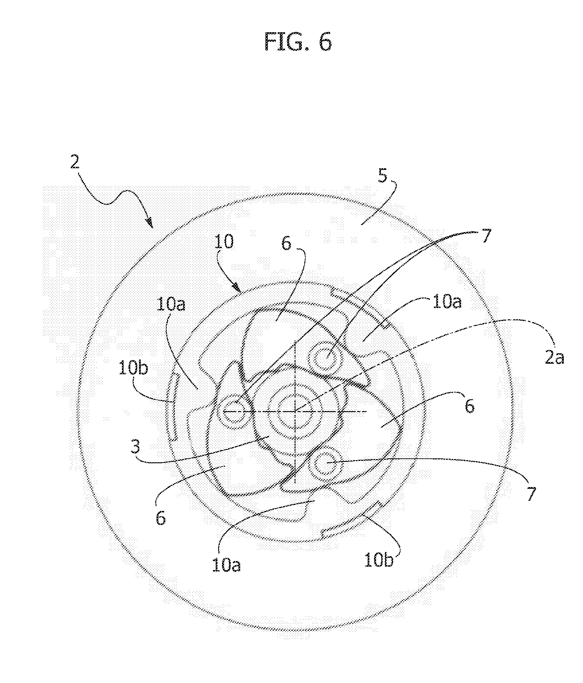

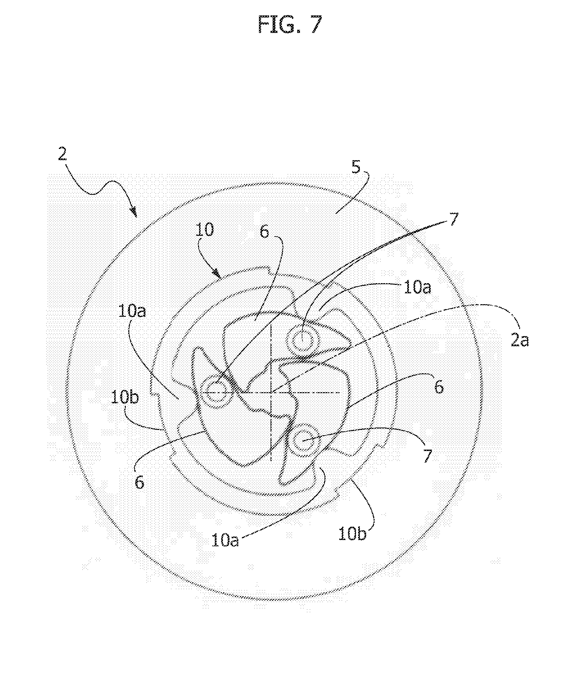

A plurality of locking jaws 6 (three jaws are provided in the case of the illustrated example) are provided inside the housing 4, which are able to be clamped around the striker bolt 3a so as to prevent withdrawal thereof from the housing 4 due to the interference of these jaws with the enlarged head 3b (see also figures 6-8).

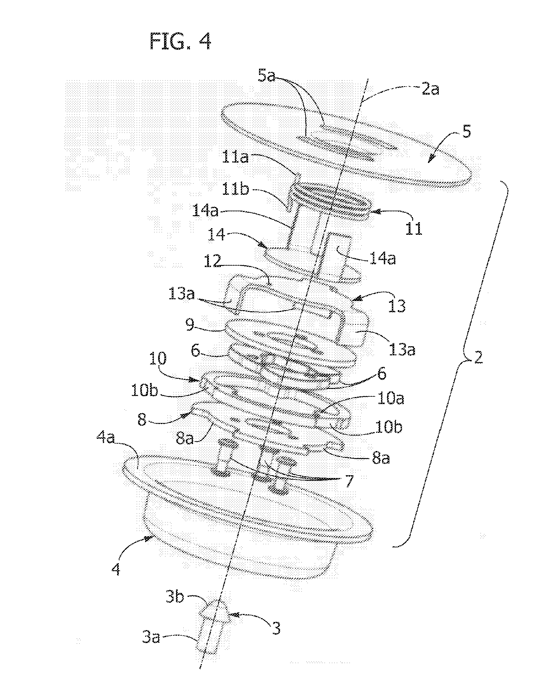

The locking jaws 6 are pivotally mounted around pins 7 (see figure 4) whose axes are arranged circumferentially around the main axis 2a of the locking unit 2, parallel to axis 2a.

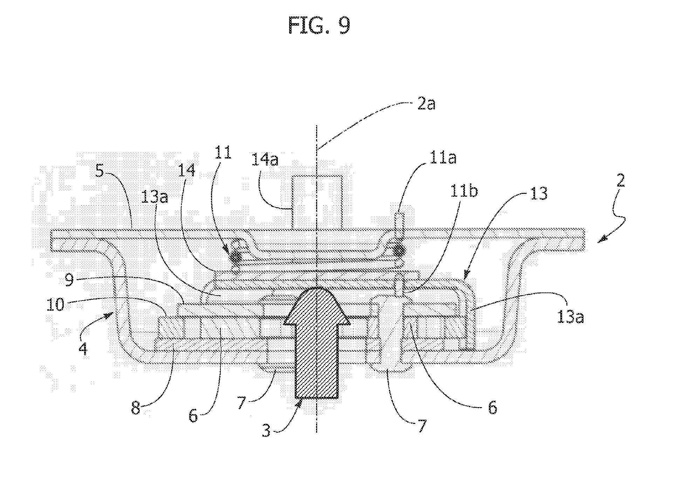

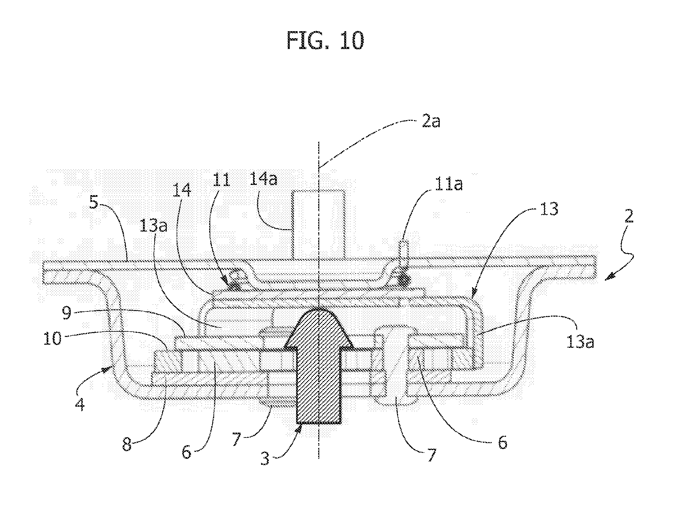

As visible in figures 9, 10 each of the pins 7 on which the locking jaws 6 are pivotally mounted is rigidly connected to the bottom wall of the housing 4, as well as to a plate 8 supported on the inner surface of this bottom wall and to a counter-plate 9, the jaws 6 having flattened bodies guided within the space between plate 8 and counter-plate 9.

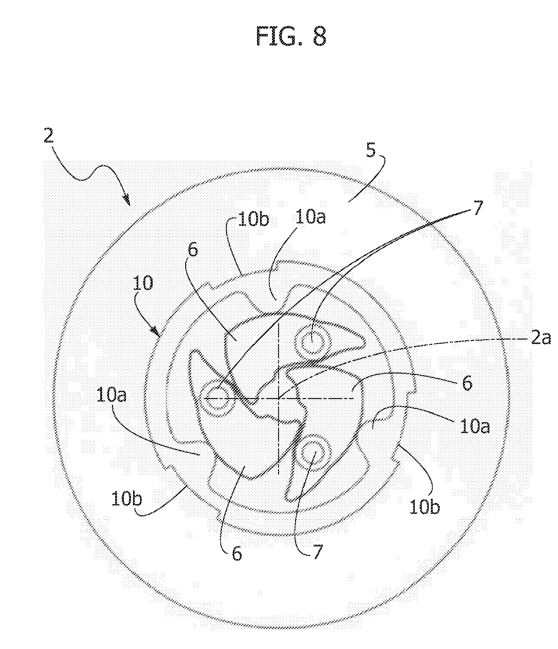

The movement of the locking jaws 7 from the opened condition shown in figure 6 to the completely closed condition shown in figure 8 is driven by an actuating ring 10 rotatably mounted around the main axis 2a of the locking unit 2 and provided with inner cams l0a adapted to come into engagement with outer shaped surfaces of the jaws 6 so as to cause the progressive closing movement of the jaws 6 as shown in figures 6, 7 and 8.

With reference in particular to figures 4 and 9, 10, numeral 11 designates a helical spring having an end tail 11a which is inserted within a hole of the disk 5, and an end tail 11b which is inserted into a hole 12 of a plate 13 provided with three spider legs 13a.

When the locking unit 2 is in its lowered condition, ready for receiving and locking therein the striker member 3, the plate 13 with its spider legs 13a holds the actuating ring 10 in a position corresponding to the opened condition of the jaws 6, against the action of spring 11. In this condition, the legs 13a of plate 3 are engaged both through peripheral slots 10b of the actuating ring 10, and through peripheral slots 8a (figure 4 and figure 9) of the plate 8. In this condition, spring 11 is deformed as a result of a relative rotation of its two ends with respect to the main axis 2a, so that it tends to bias the plate 13, and hence the actuating ring 10, towards a rotated position corresponding to closing of the jaws.

The operation of the above described device is as follows.

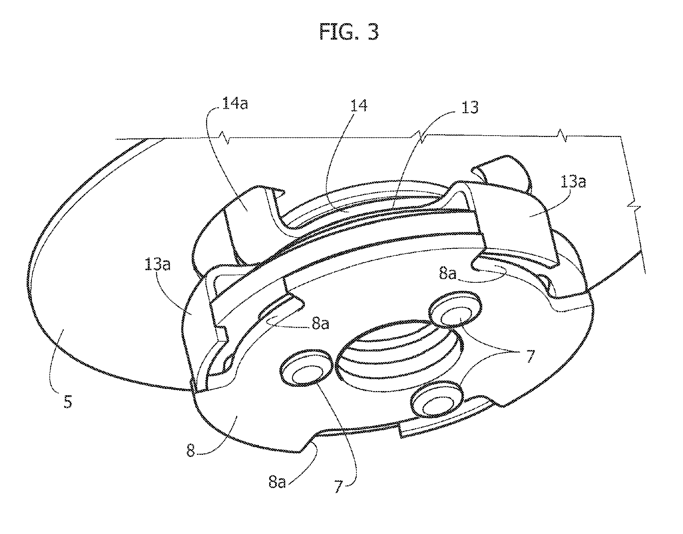

As already indicated, when the locking unit 2 is in the loaded condition, arranged for receiving and locking therein the striker member 3, the spring 11 is loaded so as to tend to rotate the actuating ring 10 towards the position for closing of the jaws, but the ring is instead held in the position corresponding to the opened condition of the jaws 6 because the spider legs 13a of plate 13 are engaged into the peripheral slots 8a of the fixed plate 8 (see also figure 3).

When, following a relative movement of the locking unit 2 and the striker member 3 towards each other, the striker member enters into the housing 4 through the front opening 4b, it comes in contact with plate 13 (figure 9). Continuing with its movement of penetration into housing 4, the striker member 3 moves the plate 13 in the direction of the main axis 2a of the device, compressing the spring 11 (which therefore in this stage operates as a spring loaded by compression). The axial movement of plate 13 brings the spider legs 13a to come out of the engagement with the peripheral slots 8a of the fixed plate 8 (figure 10) which leaves the plate 13 free to rotate, under the action of spring 11, transmitting its rotation to the actuating ring 10, due to the engagement of the legs 13a into the peripheral slots 10b of ring 10. The rotation of the actuating ring 10 causes closing of the jaws 6 around bolt 3a, following the action of cams 10a on the shaped outer surfaces of jaws 6 (figure 8). In this condition, the striker bolt 3 is therefore caught within the housing 4, with no possibility to be withdrawn therefrom, due to the interference between the enlarged head 3b and the jaws 6.

In the case for instance of the above mentioned application, where the striker member 3 is provided on the motor-vehicle floor panel and the locking unit 2 is provided below the lower structure of a tiltable seat, to the striker bolt 3 there may be associated a rubber support, adapted to come in contact with the front outer surface of the bell-shaped element 4, so as to take up any axial play between the striker member 3 and the jaws 6 once the striker member is locked within the device.

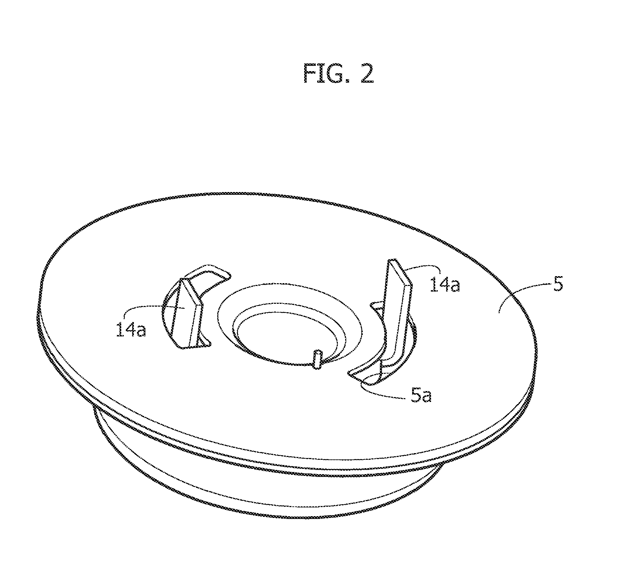

Also with reference to figure 4, to plate 13 there is rigidly connected a counter-plate 14 provided with two peripheral axial tabs 14a which project outwardly from the housing of the device through arched slots 5a of disk 5 (see also figure 2).

The tabs 14a are to be driven by any mechanical transmission (not shown) to rotate the actuating ring 10 back to its position corresponding to opening of the jaws 6, the opening movement being caused by the engagement of the inner cams 10a of the actuating ring 10 on the shaped outer surfaces of the jaws 6. When the jaws 6 are opened, the striker member 3 can be withdrawn from the housing 4. The spring 11 thus forces plate 13 back to its position of engagement of legs 13a within the peripheral slots 8a of the fixed plate 8, so as to hold the actuating ring 10 again in its position corresponding to the opened condition of the jaws, against the biasing action of spring 11.

As it readily appears from the foregoing, in the above described embodiment, spring 11 fulfils both the function of rotating the actuating ring 10 around the main axis 2a up to the position for closing of the jaws 6, and the function of opposing the axial movement of plate 13, which acts as a holding member 10, towards the position in which the ring 10 is free to rotate, thus driving closing of the jaws 6.

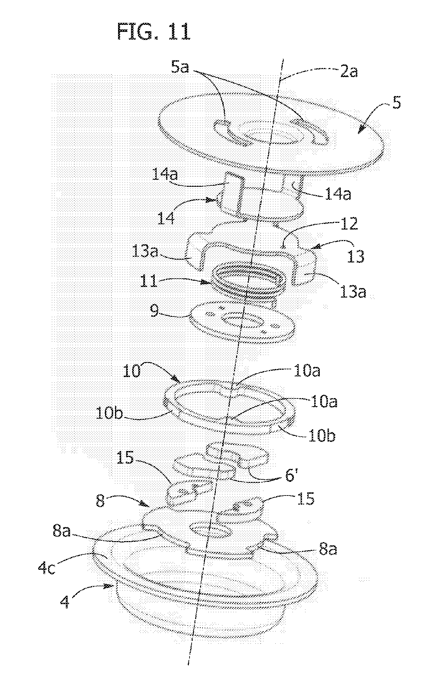

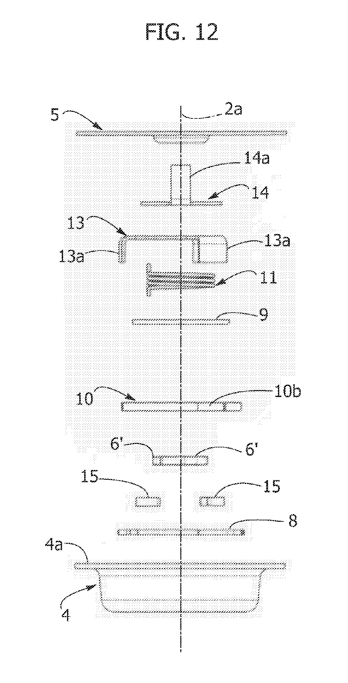

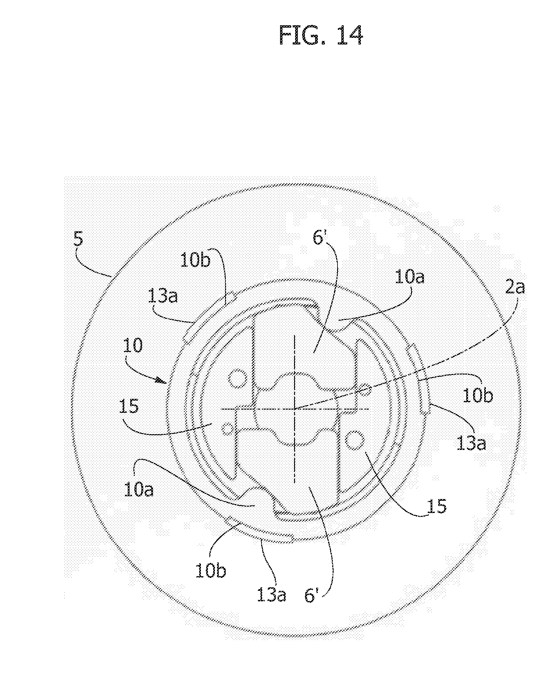

Figures 11-15 show a second embodiment which differs from that described above because it only comprises two jaws 6' which are guided so as to be movable along a straight radial direction with respect to the main axis 2a.

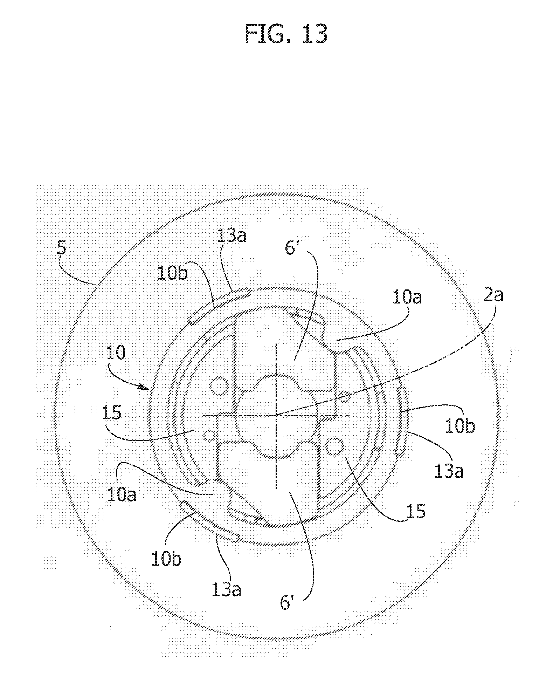

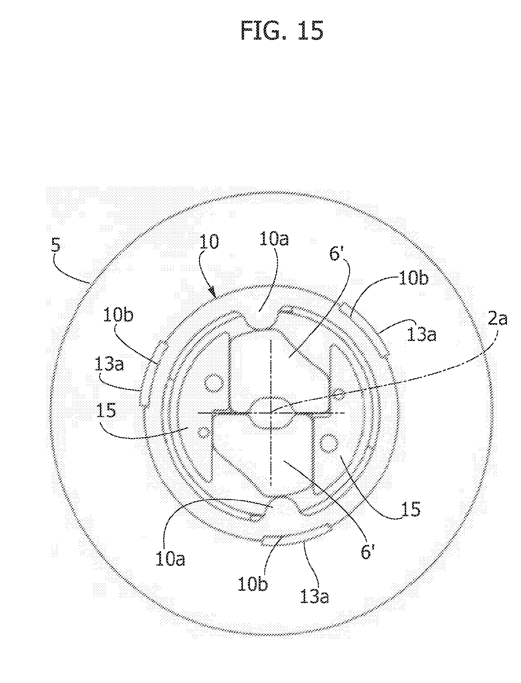

In figures 11-15, parts in common to those in figures 1-10 are designated by the same reference numeral. Also in this case, rotation of the actuating ring 10 causes, by means of the inner cams 10a, a movement of jaws 6' from the opened condition (figure 13) up to the completely closed position (figure 15) through the engagement of cams 10a on the shaped outer surfaces of jaws 6'. These jaws are guided between two opposite guiding plates 16 which are fixed to the housing of the device, through plate 8. For the rest, the structure and operation of the embodiment of figures 11-15 are identical with those described with reference to figures 1-10.

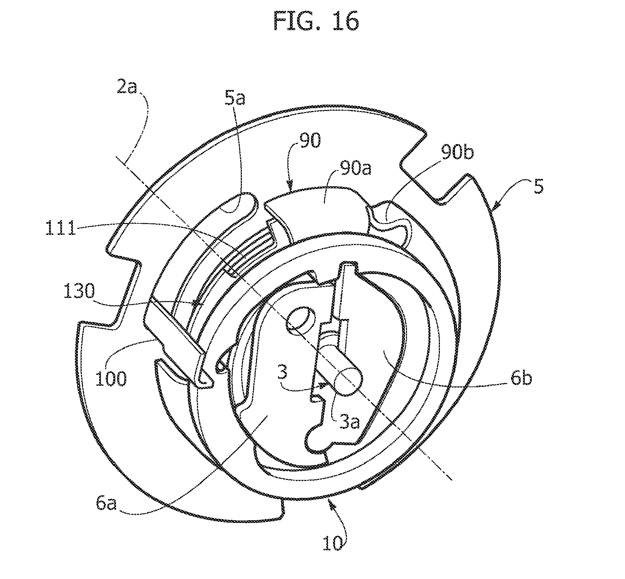

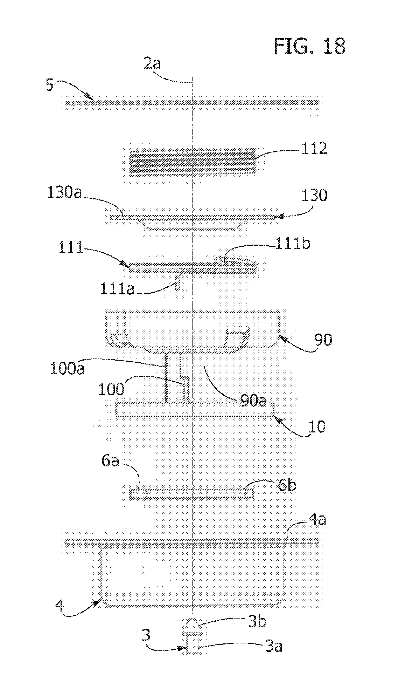

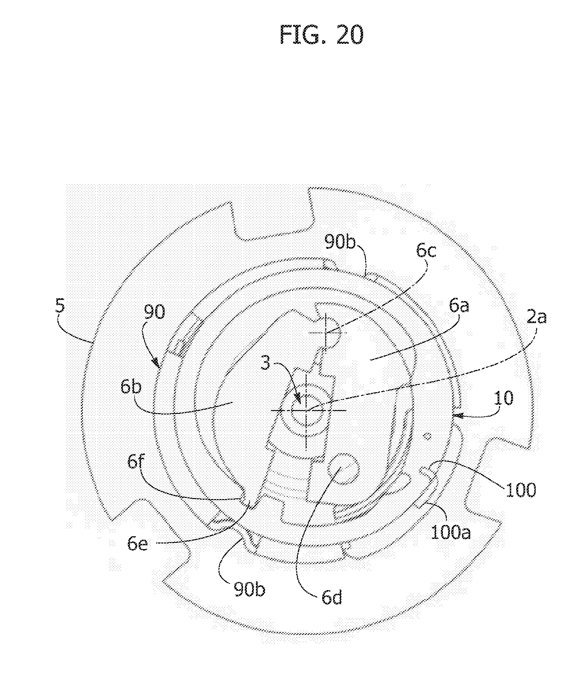

Figures 16-24 show a third embodiment which differs from the two embodiments described above both for the configuration of the locking jaws of the striker member, and for that the two functions which in the above described embodiments are fulfilled by a single spring 11 (the function of rotating the actuating ring 10 and the function of opposing the axial movement of the holding member 13) are fulfilled by two separate springs.

Also in the case of these figures, the parts in common to those of the above described embodiments are designated by the same reference numerals.

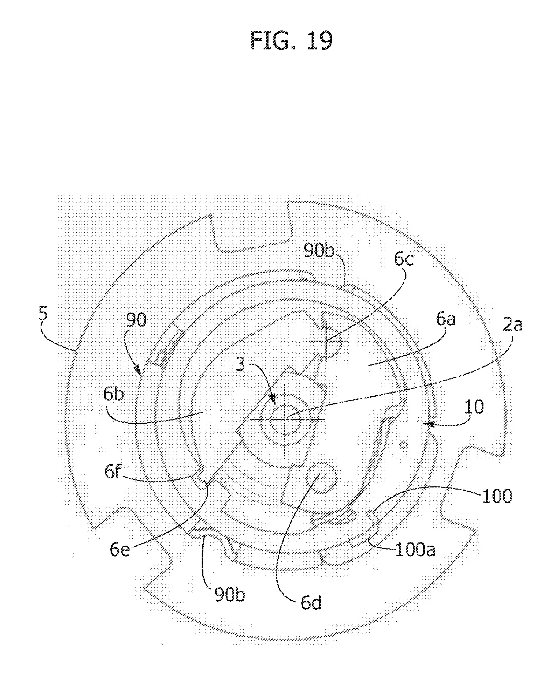

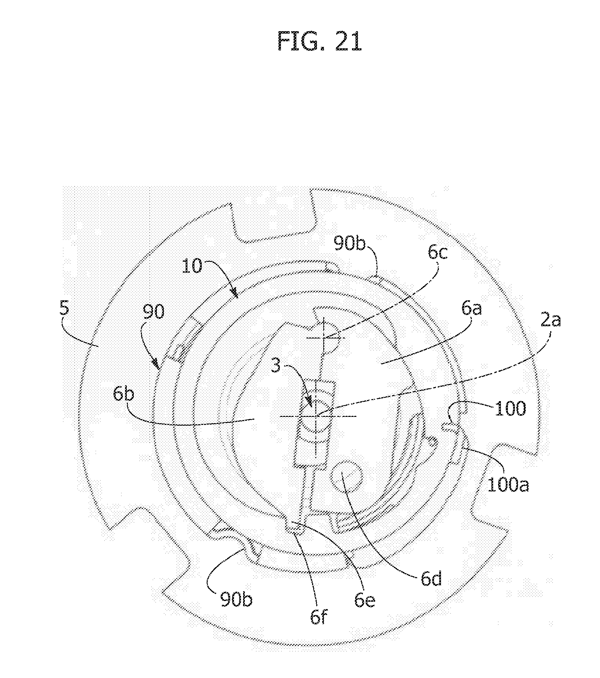

In the case of this embodiment there are provided only two locking jaws 6a, 6b which have ends pivotally connected to each other around an axis 6c (see in particular figures 19-21). Jaw 6a has its end opposite to that which is pivotally connected to jaw 6b which is pivotally mounted around a pin 6d which is fixed with respect to the housing 4. The other jaw 6b has its end 6e opposite to that which is pivotally connected to jaw 6a which is engaged within a seat 6f formed on the inner surface of the actuating ring 10, so that this end 6e is compelled to follow the rotations of ring 10. In particular, as shown in figures 19, 21, an anticlockwise rotation (with reference to figures 19-21) of the actuating ring 10 causes the progressive clamping of jaws 6a, 6b around the striker member 3. An opposite rotation causes opening of the jaws.

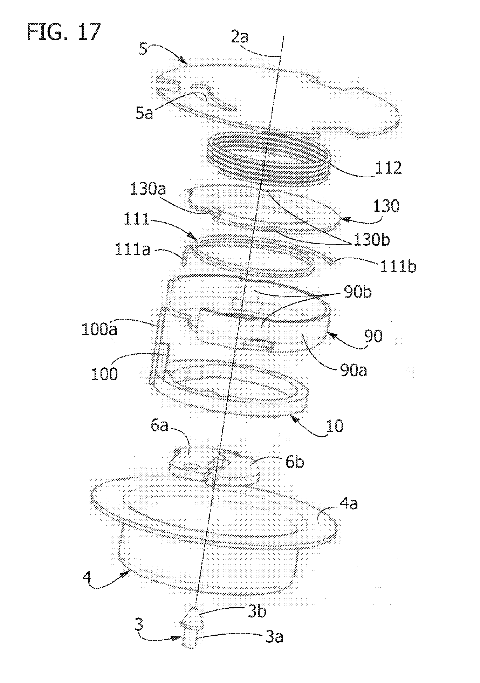

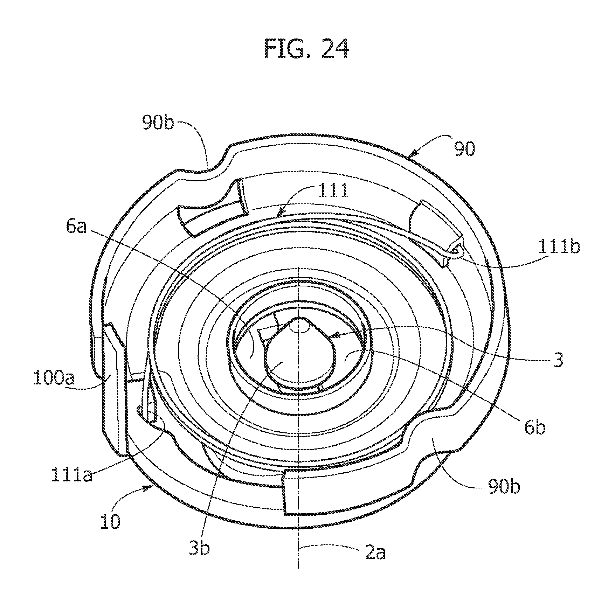

With reference to figures 17 and 24, the locking unit comprises a helical spring 111 which tends to rotate the actuating ring 10 around the main axis 2a towards the closing position of the jaws 6a, 6b, and a helical spring 112 loaded by compression, which tends to oppose the axial movement of the holding member of the actuating ring 10 caused by the relative axial movement of the striker member 3 within the housing 4. In the case illustrated herein, spring 111 (figure 24) has one end 111a directly connected to the actuating ring 10 and the opposite end 111b connected to a counter-support 90, which is fixed with respect to the housing 4. The actuating ring 10 is prevented from rotating towards the position causing closing of the jaws 6a, 6b, where it is biased by spring 111, by a holding member 130 in form of a plate having a peripheral slot 130a where a peripheral axial appendage 100 of the actuating ring 10 is engaged. The holding plate 130 is form of a disk and is arranged concentrically within a peripheral skirt 90a of the counter-support 90 and has peripheral slots 130b engaged by inner radial projections 90b of the skirt 90a, so that it is prevented from rotating around axis 2a. Spring 112 is axially interposed between the holding disk 130 and disk 5. The latter has an arched slot 5a from which there projects an extension 100a of the axial appendage 100 of the actuating ring 10.

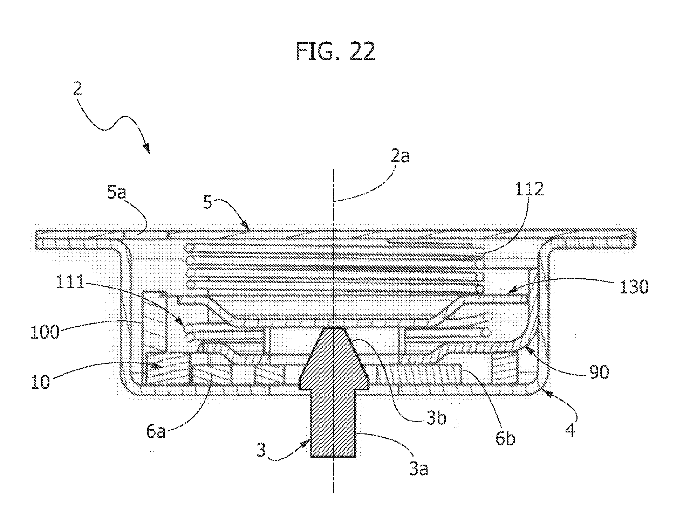

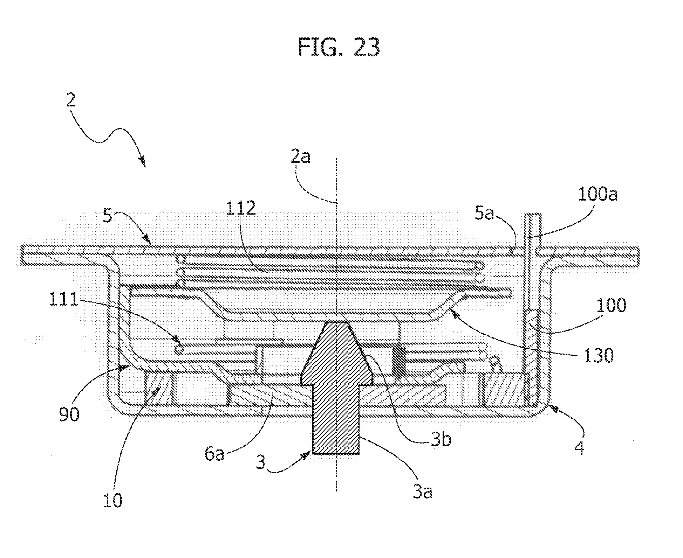

The operation of the embodiment shown in figures 16-24 is similar to that of the previously described embodiments. When the locking unit is in its loaded condition, arranged for receiving and locking therein the striker member 3, the jaws 6a, 6b are opened and the actuating ring 10 for actuation of the jaws is held in this position, against the action of spring 111, by the holding member 130 which is arranged within the skirt 90a of the counter-support 90 and is engaged with its outer slot 130a on the axial appendage 100 of ring 10. The axial movement of the striker member 3 within the housing 4 (figures 22, 23) causes the axial movement of the holding disk 130, against the action of spring 112 up to the condition (figure 23) in which the disk 130 comes out of the engagement with the appendage 100 of the actuating ring 10. The latter is thus free to rotate, under the action of spring 111, thus driving the progressive closing of the jaws 6a, 6b. When the device must be unlocked, the tab 100 is actuated, by a mechanical transmission of any type (not shown) so as to cause an opposite rotation of the actuating ring 10 up to the position corresponding to opening of the jaws. In this condition, the striker member 3 may be disengaged from the housing of the device, with a resulting return of the holding disk 130, under the action of spring 112, to the position holding the appendage 100 of the actuating ring 10.

As it will be clearly apparent from the foregoing, all the above described embodiments are characterized by that the relative movements of the locking unit 2 and the striker member 3 towards each other takes place with a movement of the bolt constituting the striker member 3 substantially in the direction of the axis thereof and substantially parallel to the main axis 2a of the locking unit. As already indicated in the foregoing, this feature constitutes a major difference with respect to the conventional devices in which the striker member engages the locking unit by a movement in a direction orthogonal to the axis of the bolt, of course with reference to the relative movement of the bolt with respect to the locking unit.

Due to the above described features, all the embodiments of the invention are characterized for that they have a housing 4 with a front surface having no irregularities and a relatively reduced bulk, which avoids any inconveniences when the device is arranged below the base structure of a tiltable seat, in the condition in which the seat is tilted forwardly, in which condition the above mentioned front surface of the housing is arranged substantially vertically and facing towards the rear part of the motor-vehicle. In this condition, there is no hindrance or risk for the user during the operations for loading or unloading the luggage compartment of the motor-vehicle. It is particularly important to be noted that in all the embodiments of the device according to the invention the actuating ring 10 is rotatably mounted around an axis which is not strictly fixed, but rather it is free to float, to a certain extent, within its plane, so as to accommodate any misalignments of the striker bolt 3 with respect to the main axis 2a, which may be caused by the tolerances of manufacture.

Naturally, while the principle of the invention remains the same, the details of construction and the embodiments may widely vary with respect to what has been described and illustrated purely by way of example, without departing from the scope of the present invention.

## Claims

1. Locking device for motor-vehicle seats, comprising:
a locking unit (2) cooperating with a striker member (3) for locking this striker member (3) within this locking unit (2) following a relative movement of the locking unit (2) and the striker member (3) towards each other,
**characterized in that**:
- said striker member (3) is in form of a bolt (3a) with an enlarged head (3b),
- said locking unit (2) has a housing (4), having a main axis (2a) which receives therein said striker member (3) following said relative movement, with the striker member (3) moving substantially in the direction of its axis and substantially parallel to said main axis (2a),
- within the housing (4) of said locking unit (2) there are arranged locking jaws (6); (6'); (6a, 6b), adapted to be clamped around the striker bolt (3a) so as to prevent a withdrawal thereof from the housing (4) due to the interference with said enlarged head (3b),
- said locking unit (2) comprising:
- an actuating ring (10), rotatably mounted substantially around the main axis (2a) for driving the movement of the locking jaws (6), (6'); (6a, 6b), from an opened condition to a closed condition,
- spring means (11; 111) for biasing said actuating ring (10) towards the position for closing of the jaws (6; 6'; 6a, 6b),
- a holding member (13; 130) for holding the actuating ring (10) in the position for opening of the jaws (6; 6'; 6a, 6b) arranged to be pushed in the direction of the main axis (2a) by the head (3b) of the striker member (3) following the relative axial movement of the latter within the housing (4), against the action of said spring means (11; 112), towards a position in which it leaves the actuating ring (10) free to drive closing of the jaws (6; 6'; 6a, 6b).

2. Device according to claim 1, **characterized in that** said first spring means and said second spring means are constituted by a single helical spring (11) arranged coaxially to the main axis (2a) of the locking unit (2) and adapted to be loaded both by a rotation around said axis (2a) and by a compression along said axis (2a).

3. Device according to claim 1, **characterized in that** said first spring means and said second spring means are constituted by two helical springs (111, 112) both arranged coaxially to the main axis (2a) of the locking unit (2) and being adapted to oppose a rotation around said axis (2a) and the other being adapted to oppose a compression along said axis (2a).

4. Locking device according to claim 1, **characterized in that** said jaws (6) are pivotally mounted around respective axes arranged circumferentially around the main axis (2a) and parallel thereto and have shaped outer surfaces cooperating with inner cams (10a) of the actuating ring (10).

5. Device according to claim 4, **characterized in that** said holding member (13) is constituted by a plate which is rotatably mounted around the main axis (2a) within the housing (4) and is biased by said first spring means (11) towards a position corresponding to the closed condition of the jaws (6), said plate being provided with a plurality of axial legs (13a) adapted to be engaged both within peripheral slots (10b) of the actuating ring, for transmitting a rotation of said holding plate (13) to the actuating ring (10), and within peripheral slots (8a) of a plate (8) fixed to the housing (4) in order to hold said actuating ring (10) in the condition corresponding to opening of the jaws (6) against the action of said first spring means; said holding plate (13) being able to be moved in the direction of the main axis (2a), under the force applied by the striker member (3) and against the action of said second spring means, towards a position in which its legs (13a) are disengaged from said fixed plate (8) so as to enable free rotation of the holding member (13) and the actuating ring (10), under the action of the first spring means (11) towards the position corresponding to closing of the jaws (6).

6. Locking device according to claim 4, **characterized in that** said jaws (6') are two in number and are slidably mounted between guiding elements (15) along a direction orthogonal to the main axis (2a) of the locking unit, these jaws having shaped outer surfaces cooperating with inner cams (10a) of the actuating ring (10).

7. Locking device according to claim 1, **characterized in that** two jaws (6a, 6b) are provided having ends pivotally connected to each other and opposite ends one of which is pivotally connected to the housing (4) of the locking unit, the other end being operatively associated to the actuating ring (10).

8. Locking device according to claim 1, **characterized in that** said first spring means are constituted by a helical spring (111) arranged coaxially to the main axis (2a) and having one end connected to the actuating ring (10) and the opposite end connected to a support (90) fixed to the housing (4).

9. Device according to claim 8, **characterized in that** said holding member is constituted by a disk (130) which is slidably mounted while being prevented from rotating within a cylindrical skirt (90a) of a support (90) fixed to the housing (4) of the locking unit and having a peripheral slot (130a) which can be engaged by a peripheral axial appendage (100) of the actuating ring (10), said holding disk (130) being movable in the direction of the main axis (2a), against the action of a compression loaded helical spring (112) by the striker member (3) up to a position in which it disengages from said axes appendage (100) so as to enable the rotation of the actuating ring (10) towards the position corresponding to closing of the jaws (6).

10. Device according to claim 1, **characterized in that** it comprises a loading member (14; 100a) connected in rotation to the actuating ring (10) and having at least one portion projecting outwardly from the housing (4) of the locking unit to enable actuation thereof in order to bring the jaws back to the opened condition.

11. Locking device according to claim 1, **characterized in that** the actuating ring (10) is rotatably mounted around an axis which is not strictly fixed, said ring being adapted to float, to a certain extent, within its plane, so as to accommodate any misalignments of the striker bolt (3) with respect to the main axis (2a) caused by the tolerances of manufacture.
